Europäisches Patentamt

European Patent Office

Office européen des brevets

(19)

(11) Numéro de publication: **0 240 699 B1**

(12) **FASCICULE DE BREVET EUROPEEN**

(45) Date de publication du fascicule du brevet:
08.08.90

(51) Int. Cl.⁵: **B30B 11/22**

(21) Numéro de dépôt: 87102819.7

(22) Date de dépôt: 27.02.87

(54) **Filière d'extrusion pour faire des produits plats.**

(30) Priorité: 08.04.86  CH 1364/86

(43) Date de publication de la demande:
14.10.87 Bulletin 87/42

(45) Mention de la délivrance du brevet:
08.08.90 Bulletin 90/32

(84) Etats contractants désignés:
AT BE CH DE ES FR GB IT LI LU NL SE

(56) Documents cités:
FR-A- 537 698
FR-A- 2 461 573
US-A- 2 842 072
US-A- 3 196 486

(73) Titulaire: SOCIETE DES PRODUITS NESTLE S.A., Case postale 353, CH-1800 Vevey(CH)

(72) Inventeur: Heck, Ernst, Ch. du Motty 10,
CH-1026 Echandens(CH)

## Description

L'invention concerne une filière d'extrusion pour faire des produits plats à surface également lisse de chaque côté et à bords réguliers.

La fabrication de produits en bande par le procédé cuisson/extrusion/expansion est connu. Le brevet FR-A 2 461 573 concerne une extrudeuse pour la fabrication de produits en bande comportant une première chambre à la sortie de la vis de l'extrudeuse, un canal cylindrique débouchant, en aval, sur une deuxième chambre constituant la base d'un U pour l'extrusion de la pâte. Ce dispositif, outre qu'il est compliqué, ne donne pas un flux régulier de pâte. Ce qui conduit à un produit final irrégulier. Le brevet CH 624 604 concerne un embout d'extrusion comportant en amont de la buse d'extrusion une grille placée en intermédiaire dans la chambre avant entre la pointe de la vis de l'extrudeuse et la chambre d'égalisation de pression. Ce dispositif n'est utilisable qu'avec une extrudeuse à deux vis corotatives, d'autre part comme la vis appuie directement sur la grille de contre-pression, l'usure de la tête de la vis de l'extrudeuse conduit à un produit irrégulier, en raison du jeu qui existe entre ladite tête de vis et ladite grille de contre-pression. En ce qui concerne le produit obtenu, il n'est pas également lisse de chaque côté et il a une tendance au bombage et aux déformations en raison de tensions internes.

La filière d'extrusion selon la présente invention est utilisable avec n'importe quelles vis et têtes de vis aussi bien avec une monovis qu'une bi-vis co- ou contrarotative cylindrique ou conique et l'usure des têtes de vis n'a aucune influence sur le système car elles sont séparées de la filière d'extrusion elle-même. Le produit obtenu avec la filière d'extrusion selon la présente invention est lisse de chaque côté et à bords réguliers et droits, il n'a aucune tendance au bombage et il est bien homogène.

La présente invention concerne une filière d'extrusion pour faire des produits plats comprenant d'amont en aval:

- au moins un canal de distribution suivi d'une chambre de distribution de la pâte à extruder, ledit canal étant placé après la sortie du canal central de l'extrudeuse et s'étendant perpendiculairement à l'axe dudit canal central et ladite chambre de distribution présentant une section sensiblement rectangulaire,
- une plaque de contre-pression et répartition percée de canaux parallèles et présentant une section sensiblement rectangulaire en correspondance avec celle de la chambre de distribution,
- une chambre de réunification des brins sortant de la plaque de répartition présentant un profil sensiblement tronc pyramidal et une section diminuant de ladite section sensiblement rectangulaire à la section d'une fente d'extrusion,
- une fente d'extrusion de section sensiblement rectangulaire et
- une fente de contrôle d'expansion de section plus large que la fente d'extrusion.

On entend par produit plat, un produit alimentaire tel que celui obtenu par cuisson/extrusion/expansion à partir d'une pâte à base d'eau, de farine et de matières grasses. Il est entendu que ladite pâte peut également contenir d'autres ingrédients utilisables dans l'industrie alimentaire, à savoir du sucre, du sel, du cacao et autres. On appele brins les filaments de pâte sortant de la plaque de contre-pression.

L'intérêt de la filière selon l'invention réside dans le fait que après avoir amené en contact les matières premières dans la ou les vis du système d'extrusion, opéré grâce auxdites vis un mélange intime des matières premières, on arrive à la sortie des vis sur un canal central dans lequel toute la masse de pâte est réunie et on distribue ensuite perpendiculairement à l'axe dudit canal central la masse de pâte sur un ou plusieurs canaux et chambres de distribution, lesdites chambres de distribution étant de préférence disposées à égale distance de l'axe du canal central et les canaux de distribution faisant entre eux un angle de 360°/n, $\underline{n}$ étant le nombre de canaux de distribution. On définit comme angle entre les canaux de distribution, l'angle formé par les plans passant par l'axe du canal central et par les différents milieux des chambres de distribution ou des plaques de contre-pression. Il est en outre nécessaire que la largeur des différents canaux de distribution soit la même.

On voit ainsi que le nombre, le sens de rotation et la forme de la ou des vis d'extrusion n'ont aucune influence sur le produit à préparer. La disposition particulière des chambres de distribution garantit une répartition uniforme de la pâte.

Le but de la présente invention est de réaliser une filière d'extrusion dans laquelle la pâte a une vitesse égale dans un plan perpendiculaire à l'axe du canal central. Cet objectif est pratiquement atteint dans la chambre de distribution. Ce qui permet de réaliser un produit final ayant les caractéristiques déjà mentionnées ci-dessus, à savoir un produit plat lisse de chaque côté, à bords réguliers et n'ayant aucune tensions interne. Le fonctionnement de la filière selon l'invention sera explicité davantage en référence aux figures.

La chambre de distribution, la plaque de contre-pression et la fente d'extrusion ont de préférence une section sensiblement rectangulaire, dont les petits côtés se terminent par une forme concave, par exemple mi-circulaire, mi-elliptique, mi-ovale, effilée ou autre forme similaire. Cette section rectangulaire permet ainsi d'amener la pâte dans une forme allongée proche de sa forme finale. Pour la chambre de distribution et la plaque de contre-pression, la longueur du rectangle est comprise de préférence entre 1 et 10 fois sa largeur. Pour la fente d'extrusion, la longueur du rectangle est comprise de préférence entre 10 et 50 fois sa largeur. On peut également opérer avec une fente d'extrusion ayant une section ondulée.

La fente de contrôle d'expansion est de préférence en une matière ayant une bonne glissabilité, par exemple en polytétrafluoroéthylène (PTFE) ou un composite de PTFE avec une matière conférant une bonne rigidité. Les autres éléments de la filière d'extrusion sont en acier inox ou en fer. Il n'y a pas de parties soudées, de sorte que tous les éléments sont interchangeables à volonté et rapidement. La filière d'extrusion comporte de préférence entre 2 et 8 canaux de distribution, ainsi bien entendu que le nombre correspondant d'éléments y associés, à savoir la chambre de distribution, la plaque de contre-pression, la chambre de réunification, la fente d'extrusion et la fente de commande d'expansion. De préférence, l'embout comporte entre 2 et 4 canaux de distribution. Ce nombre est fonction des dimensions du produit à fabriquer et de la fente d'extrusion. Le principal est toujours d'avoir une répartition bien symétrique par rapport à l'axe du canal central. A cet effet, comme déjà mentionné ci-dessus, les chambres de distribution sont de préférence à égale distance de l'axe du canal central et les canaux de distribution font entre eux un angle de 360°/n, n étant le nombre de canaux. Si on a 2, 3 ou 4 canaux, les angles seront respectivement de 180°, 120° et 90°. La plaque de contre-pression présente de préférence 5 à 40 canaux répartis uniformément. Suivant le nombre de ces canaux, on aura un produit final ayant une texture plus légère ou plus lourde. Le diamètre de ces canaux est de préférence compris entre 1 et 5 mm. Il arrive que pour des produits difficilement formables, il soit nécessaire de prévoir à la sortie de la fente de commande d'expansion un dispositif de calibrage, pour bien former les quatre bords du pain plat. Pour ce dispositif de calibrage, il n'y a pas de problème de mise en place, c'est-à-dire d'encombrement, car les fentes d'extrusion sont suffisamment éloignées l'une de l'autre.

L'extrudeuse avec sa filière est bien sûr intégrée dans une ligne de fabrication comportant à sa sortie: une bande transporteuse pour le conditionnement, un dispositif de toastage du produit plat fonction de l'humidité, de la couleur, de la texture et de l'apparence du produit final désiré et des couteaux pour couper le produit plat à la grandeur souhaitée.

Comme la vitesse de sortie des bandes de produit plat provenant de chaque fente d'extrusion est la même, il n'est pas nécessaire de séparer les éléments de la ligne de fabrication, ils peuvent avoir une commande commune.

La suite de la description est faite en référence aux dessins sur lesquels:

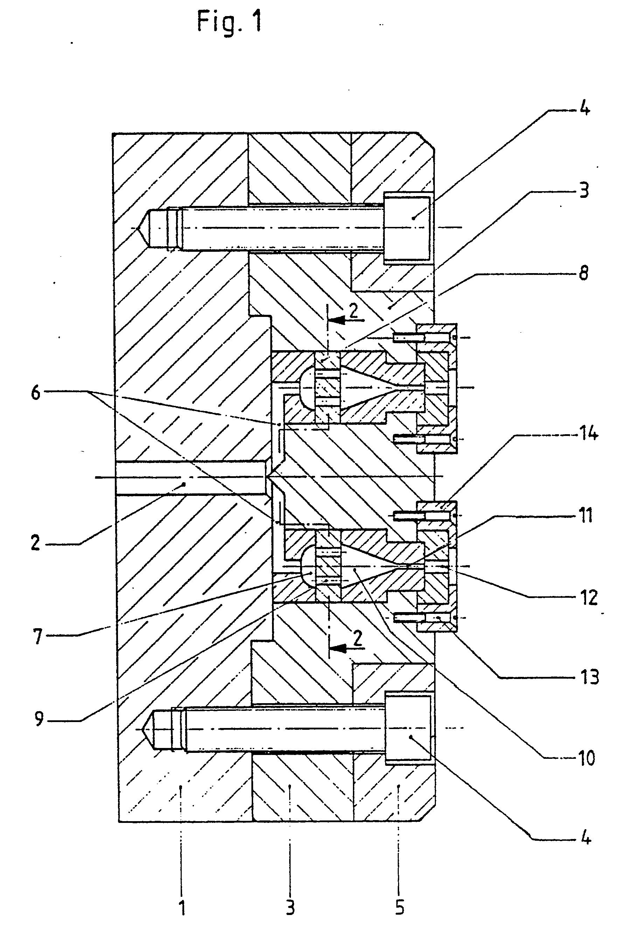

Fig. 1 est une coupe longitudinale dans une filière d'extrusion selon l'invention présentant 4 canaux de distribution.

Fig. 2 est une coupe selon la ligne 2–2 de la figure 1.

La plaque centrale (1) fait suite aux vis de l'extrudeuse (non représentées) et comporte un canal central (2) qui débouche sur la filière d'extrusion (3) proprement dit. Cette filière (3) est assujettie par des vis (4) et une bride (5) sur la plaque centrale (1) et elle comporte des canaux de distribution (6), des chambres de distribution (7), des plaques de contre-pression (8) avec des canaux parallèles (9), des chambres de réunification des brins (10), des fentes d'extrusion (11) et des fentes de contrôle d'expansion (12). Les fentes de contrôle d'expansion (12) sont assujetties à la filière (3) grâce à des vis (13) et une bride (14).

La pâte arrive par le canal central (2), est distribuée uniformément par les canaux (6) sur les chambres de distribution (7). Elle possède déjà pratiquement la même vitesse à l'entrée dans la plaque de contre-pression (8) en tous points d'un plan perpendiculaire à l'axe du canal central (2) ce qui permet de réaliser plusieurs brins individuels de configuration spécifique compte tenu du produit final à réaliser.

Grâce à la forme allongée de cette plaque (8), à la dimension, à la forme et à la disposition des canaux parallèles (9), on arrive à un préformage de produit. La pression et la température de la pâte accumulée dans cette plaque peuvent déjà être considérées comme uniformes. Les brins individuels de pâte sont ensuite pré-expansés et fondus de manière homogène dans la chambre de réunification (10).

Dans cette zone, la masse acquiert une structure légère ou serrée suivant le choix de la plaque de contre-pression. Cette masse est comprimée en direction de la fente d'extrusion, dans laquelle la friction sur la surface du produit se fait de manière extrêmement régulière, ce qui conduit à un produit final ayant une haute qualité de surface.

Après la fente d'extrusion, le produit arrive dans la fente de contrôle d'expansion, où il est post-expansé et formé dans sa forme définitive. Le produit plat est alors prêt et il continue à avancer sous forme de bande continue sur le reste de la ligne de fabrication.

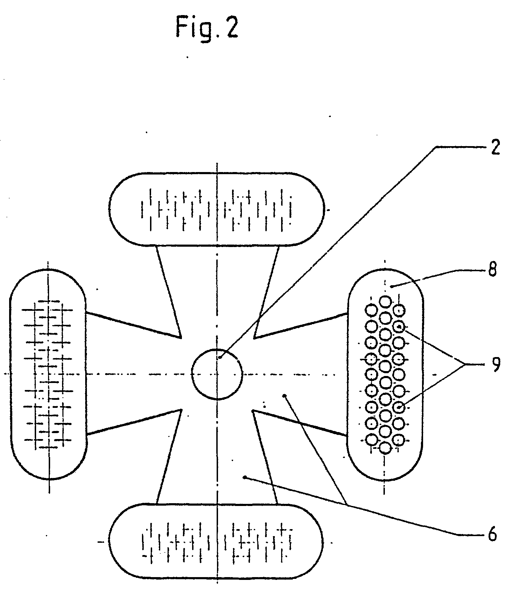

On voit bien sur la Fig. 2 que l'angle entre les canaux de distribution est de 90° et que la largeur desdits canaux est la même, assurant ainsi à la pâte à extruder une répartition absolument symétrique.

La filière d'extrusion selon la présente invention est d'une grande souplesse, car on peut y démonter très rapidement ses différentes pièces, les remplacer par d'autres selon le produit final désiré.

D'autre part, en cas de défectuosité sur la filière, on démonte et on ne change que la pièce effectivement concernée. La filière selon l'invention permet de réaliser un produit plat de grande qualité pour le consommateur, par exemple un pain plat. Un autre avantage intéressant de la filière selon l'invention est qu'on peut s'adapter rapidement à la productivité désirée. Ainsi, si on opère avec une filière à 4 fentes d'extrusion et qu'on veuille réduire la production de moitié, on ferme les deux fentes d'extrusion vis-à-vis. Lorsqu'on souhaite retrouver une capacité double, on rouvre les deux fentes d'extrusion.

**Revendications**

1. Filière d'extrusion pour faire des produits plats à surface également lisse de chaque côté et à bords réguliers comprenant d'amont en aval:
   – au moins un canal de distribution (6) suivi d'une chambre de distribution (7) de la pâte à extruder, ledit canal étant placé après la sortie du canal central (2) de l'extrudeuse et s'étendant perpendiculairement à l'axe dudit canal central et ladite chambre de distribution (7) présentant une section sensiblement rectangulaire, caractérisée en ce qu'elle comprend

– une plaque de contre-pression et répartition (8) percée de canaux parallèles (9) et présentant une section sensiblement rectangulaire en correspondance avec celle de la chambre de distribution,
– une chambre de réunification (10) des brins sortant de la plaque de répartition présentant une forme de tronc de pyramide et une section diminuant de ladite section sensiblement rectangulaire à la section d'une fente d'extrusion,
– une fente d'extrusion (11) de section sensiblement rectangulaire et
– une fente de contrôle d'expansion (12) de section plus large que la fente d'extrusion.

2. Filière d'extrusion selon la revendication 1, caractérisée en ce qu'elle comporte entre 2 et 8 canaux de distribution (6) et éléments y associés, de préférence entre 2 et 4, les chambres de distribution (7) étant disposées à égale distance de l'axe du canal central (2) et les canaux de distribution (6) faisant entre eux un angle de 360°/n, $\underline{n}$ étant le nombre de canaux.

3. Filière d'extrusion selon l'une des revendications 1 et 2, caractérisée en ce que la chambre de distribution (7), la plaque de contre-pression (8) et la fente d'extrusion (11) ont une section en rectangle, dont les petits côtés se terminent par une forme concave.

4. Filière d'extrusion selon l'une des revendications 1 à 3, caractérisée en ce que pour la chambre de distribution (7) et la plaque de contre-pression (8) la longueur du rectangle est comprise entre 1 et 10 fois sa largeur.

5. Filière d'extrusion selon l'une des revendications 1 à 4, caractérisée en ce que pour la fente d'extrusion (11) la longueur du rectangle est comprise entre 10 et 50 fois sa largeur.

6. Filière d'extrusion selon l'une des revendications 1 à 5, caractérisée en ce que la plaque de contre-pression (8) présente 5 à 40 canaux (9) répartis uniformément.

7. Filière d'extrusion selon la revendication 6, caractérisée en ce que les canaux (9) ont un diamètre compris entre 1 et 5 mm.

8. Filière d'extrusion selon l'une des revendications 1 à 6, caractérisée en ce qu'il comporte à la sortie de la fente de commande d'expansion (12) un dispositif de calibrage.

**Patentansprüche**

1. Extrusionsdüse zum Herstellen von flachen Produkten mit glatter Oberfläche auf jeder Seite und mit regelmäßigen Rändern, die von stromaufwärts nach stromabwärts aufweist:
– zumindest einen Verteilkanal (6), gefolgt von einer Verteilkammer (7) für die zu extrudierende Masse, wobei der Kanal hinter dem Ausgang des zentralen Kanals (2) der Extrusionspresse angeordnet ist und sich senkrecht zur Achse dieses zentralen Kanals erstreckt und wobei die Verteilkammer (7) einen im wesentlichen rechteckigen Querschnitt hat, dadurch gekennzeichnet, daß sie aufweist
– eine Gegendruck- und Verteilplatte (8), die von parallelen Kanälen (9) durchsetzt ist und einen Querschnitt aufweist, der in Überstimmung mit jenem der Verteilkammer im wesentlichen rechteckig ist,
– eine Vereinigungskammer (10) für die aus der Verteilplatte austretenden Stränge, welche die Form eines Pyramidenstumpfes hat und einen Querschnitt, der von dem im wesentlichen rechteckigen Querschnitt bis zum Querschnitt eines Extrusionsschlitzes abnimmt,
– einen Extrusionsschlitz (11) mit im wesentlichen rechteckigem Querschnitt und
– einen Schlitz (12) zur Steuerung der Expansion, dessen Querschnitt größer als jener des Extrusionsschlitzes ist.

2. Extrusionsdüse nach Anspruch 1, dadurch gekennzeichnet, daß sie zwischen 2 und 8 Verteilkanäle (6) und zugeordnete Elemente aufweist, vorzugsweise zwischen 2 und 4, wobei die Verteilkammern (7) in gleichem Abstand von der Achse des zentralen Kanals (2) angeordnet sind und die Verteilkanäle (6) untereinander einen Winkel von 360°/n einschließen, wobei $\underline{n}$ die Anzahl der Kanäle ist.

3. Extrusionsdüse nach Anspruch 1 oder 2, dadurch gekennzeichnet, daß die Verteilkammer (7), die Gegendruckplatte (8) und der Extrusionsschlitz (11) einen rechteckigen Querschnitt haben, dessen kleinere Seiten in einer konkaven Form enden.

4. Extrusionsdüse nach einem der Ansprüche 1 bis 3, dadurch gekennzeichnet, daß für die Verteilkammer (7) und die Gegendruckplatte (8) die Länge des Rechteckes zwischen dem ein- und zehnfachen seiner Breite beträgt.

5. Extrusionsdüse nach einem der Ansprüche 1 bis 4, dadurch gekennzeichnet, daß für den Extrusionsschlitz (11) die Länge des Rechteckes zwischen dem 10- und 50fachen seiner Breite beträgt.

6. Extrusionsdüse nach einem der Ansprüche 1 bis 5, dadurch gekennzeichnet, daß die Gegendruckplatte (8) 5 bis 40 Kanäle (9) aufweist, die gleichmäßig verteilt sind.

7. Extrusionsdüse nach Anspruch 6, dadurch gekennzeichnet, daß die Kanäle (9) einen Durchmesser haben, der zwischen 1 und 5 mm beträgt.

8. Extrusionsdüse nach einem der Ansprüche 1 bis 6, dadurch gekennzeichnet, daß sie am Ausgang des Schlitzes (12) zur Steuerung der Expansion eine Kalibriervorrichtung aufweist.

**Claims**

1. An extrusion die for making flat products having an equally smooth surface on either side and regular edges, comprising in the downstream direction:
– at least one distribution bore (6) followed by a distribution chamber (7) for the dough to be extruded, said bore being positioned after the exit of the central bore (2) of the extruder and extending perpendicularly to the axis of said central bore and said distribution chamber (7) having a substantially rectangular cross-section, characterized in that it comprises:
– a counter-pressure and distribution plate (8) drilled with parallel bores (9) and having a substantially rectangular cross-section corresponding to that of said distribution chamber,

– a chamber for recombining (10) the strands issuing from the distribution plate having a substantially frustopyramidal profile and a cross-section tapering from said substantially rectangular cross-section to the cross-section of an extrusion slot,

– an extrusion slot (11) of substantially rectangular cross-section and

– an expansion control slot (12) of wider cross-section than the extrusion slot.

2. An extrusion die as claimed in Claim 1, characterized in that it comprises from 2 to 8 and preferably from 2 to 4 distribution chambers (7) being disposed equidistantly from the axis of the central bore (2) and the distribution bores (6) forming between them an angle of 360°/n, $n$ being the number of bores.

3. An extrusion die as claimed in Claim 1 or 2, characterized in that the distribution chamber (7), the counter-pressure plate (8) and the extrusion slot (11) have a rectangular cross-section of which the small sides terminate in a concave form.

4. An extrusion die as claimed in any of Claims 1 to 3, characterized in that, for the distribution chamber (7) and the counter-pressure plate (8), the length of the rectangle is between 1 and 10 times its width.

5. An extrusion die as claimed in any of Claims 1 to 4, characterized in that, for the extrusion slot (11), the length of the rectangle is between 10 and 50 times its width.

6. An extrusion die as claimed in any of Claims 1 to 5, characterized in that the counter-pressure plate (8) comprises from 5 to 40 uniformly distributed bores (9).

7. An extrusion die as claimed in Claim 6, characterized in that the bores (9) have a diameter of from 1 to 5 mm.

8. An extrusion die as claimed in any of Claims 1 to 6, characterized in that it comprises a calibrating attachment at the exit of the expansion control slot (12).

Fig. 1

# Fig. 2